# EUROPÄISCHE PATENTSCHRIFT

(11) **EP 2 702 364 B1**
(45) Veröffentlichungstag und Bekanntmachung des Hinweises auf die Patenterteilung: **06.03.2019**
(21) Anmeldenummer: 12720453.5
(22) Anmeldetag: 26.04.2012
(51) Int. Cl.: G01D 5/353, G02B 6/12

(54) **VORRICHTUNG ZUR MESSUNG VON ZUSTANDSGRÖSSEN**
APPARATUS FOR MEASURING STATE VARIABLES
DISPOSITIF POUR MESURER DES PARAMÈTRES D'ÉTAT

(30) Priorität: 27.04.2011 DE 102011017622
(43) Veröffentlichungstag der Anmeldung: 05.03.2014
(73) Patentinhaber: Fraunhofer Gesellschaft zur Förderung der angewandten Forschung E.V., 80686 München (DE)
(72) Erfinder: SCHADE, Wolfgang, 38644 Goslar (DE)
(74) Vertreter: Friese Goeden Patentanwälte PartGmbB
(86) Internationale Anmeldenummer: PCT/EP2012/057610
(87) Internationale Veröffentlichungsnummer: WO 2012/146640

(56) Entgegenhaltungen:
- US-B1- 6 448 551
- US-B1- 6 647 160
- US-B1- 6 647 160
- US-B2- 7 512 291
- US-B2- 7 541 573
- JACKSON D A ET AL: "SIMPLE MULTIPLEXING SCHEME FOR A FIBER-OPTIC GRATING SENSOR NETWORK", OPTICS LETTERS, OSA, OPTICAL SOCIETY OF AMERICA, WASHINGTON, DC, US, Bd. 18, Nr. 14, 15. Juli 1993 (1993-07-15) , Seiten 1192-1194, XP000384098, ISSN: 0146-9592
- JACKSON D A ET AL: "SIMPLE MULTIPLEXING SCHEME FOR A FIBER-OPTIC GRATING SENSOR NETWORK", OPTICS LETTERS, OPTICAL SOCIETY OF AMERICA, vol. 18, no. 14, 15 July 1993 (1993-07-15) , pages 1192-1194, XP000384098, ISSN: 0146-9592

## Beschreibung

Die Erfindung betrifft eine Vorrichtung zur Messung von Zustandsgrößen mit zumindest einem faseroptischen Sensor, enthaltend zumindest einen optischen Koppler, zumindest ein Filterelement und zumindest einen photoelektrischen Konverter. Weiterhin betrifft die Erfindung ein Verfahren zur Herstellung einer solchen Vorrichtung und deren Verwendung.
Aus der EP 1 826 545 A2 ist eine Vorrichtung der eingangs genannten Art bekannt. Die Vorrichtung verwendet einen Lichtwellenleiter, welcher in oder an einer mechanischen Komponente verlegt wird. Der Lichtwellenleiter weist eine Mehrzahl von Faser-Bragg-Gittern auf. Jedes Faser-Bragg-Gitter reflektiert einen Teil eines im Lichtwellenleiter laufenden optischen Eingangssignals. Bei Einwirken einer mechanischen Spannung verändert sich die Länge des Lichtwellenleiters und damit die Gitterkonstante der Faser-Bragg-Gitter. Dadurch ändert sich auch die reflektierte Wellenlänge, sodass durch Auswertung des reflektierten optischen Ausgangssignals auf die Belastung und/oder die Temperatur der mechanischen Komponente geschlossen werden kann. Auch aus der US 6 448 551 B1 ist eine solche Vorrichtung bekannt. Zur Erzeugung und Auswertung des optischen Signales ist bekannt, eine breitbandige Lichtquelle, einen optischen Zirkulator und ein Arrayed-Waveguide-Grating zu verwenden. Diese Bauteile werden als diskrete Elemente mit bekannten optischen Steckverbindern oder Spleißverbindungen zusammengefügt. Dieses Vorgehen weist jedoch den Nachteil auf, dass die Vorrichtung zur Signalerzeugung und -auswertung mechanisch wenig robust ist. Weiterhin ist der Platzbedarf und der Energieverbrauch vergleichsweise hoch, sodass diese bekannte Vorrichtung nur mit großem Aufwand hergestellt und betrieben werden kann.

Ausgehend von dieser bekannten Vorrichtung liegt der Erfindung daher die Aufgabe zugrunde, eine Vorrichtung zur Messung von Zustandsgrößen anzugeben, welche mit geringem Bauraum auskommt und einfach und kostengünstig herstellbar und einsetzbar ist. Die Aufgabe wird erfindungsgemäß durch eine Vorrichtung gemäß Anspruch 1 gelöst. Vorteilhafte Weiterbildungen der Erfindung sind in den abhängigen Ansprüchen angegeben. Erfindungsgemäß wird vorgeschlagen, einwirkende Kräfte, mechanische Spannungen und/oder Temperaturen an mechanische Komponenten durch die Veränderung der Gitterkonstanten von zumindest einem Faser-Bragg-Gitter zu bestimmen, welches in einem Lichtwellenleiter ausgebildet ist. Die mechanische Komponente kann dabei in einigen Ausführungsformen der Erfindung ein Bauteil aus einem faserverstärkten Kunststoff sein. In anderen Ausführungsformen der Erfindung kann die mechanische Komponente aus einem Metall oder einer Legierung bestehen. Die mechanische Komponente kann beispielsweise ein Flugzeugteil, ein Teil einer Windturbine, ein Karosserieteil oder eine Antriebskomponente eines Fahrzeuges sein. In einigen Ausführungsformen der Erfindung kann die mechanische Komponente aus einem Textilgewebe hergestellt sein oder ein solches Gewebe enthalten. In diesem Fall kann die mechanische Komponente ein textiler Bodenbelag oder ein Segel sein.
Durch Kräfte, welche auf die mechanische Komponente einwirken, kann ein in oder an der Komponente verlegter faseroptischer Sensor gestaucht oder gedehnt werden. Diese Längenänderung verändert die Gitterkonstante zumindest eines Faser-Bragg-Gitters, welches im Lichtwellenleiter des faseroptischen Sensors ausgebildet ist. In einigen Ausführungsformen der Erfindung kann der Lichtwellenleiter bzw. die optische Faser eine Mehrzahl von Faser-Bragg-Gittern enthalten, welche unterschiedliche Gitterkonstanten aufweisen können.

Der faseroptische Sensor wird in an sich bekannter Weise durch ein optisches Signal ausgelesen, welches von zumindest einer Lichtquelle erzeugt wird. In einigen Ausführungsformen der Erfindung kann die Lichtquelle ein breitbandiges optisches Signal aussenden, sodass eine Mehrzahl von Faser-Bragg-Gittern mit unterschiedlicher Gitterkonstante ausgelesen werden können.

Der von dem zumindest einen Faser-Bragg-Gitter reflektierte Anteil des optischen Eingangssignals wird durch zumindest eine passive optische Komponente gefiltert und von einem photoelektrischen Konverter in ein elektrisches Signal gewandelt. Das elektrische Signal kann dann einer Auswerteschaltung zugeführt werden.

Erfindungsgemäß wird nun vorgeschlagen, zumindest einen optischen Koppler, zumindest ein Filterelement und zumindest einen photoelektrischen Konverter auf einem Substrat zu integrieren. Auf diese Weise kann die Vorrichtung zur Messung von Zustandsgrößen zumindest teilweise als integrierte optische Komponente hergestellt sein. Hierdurch wird der Platzbedarf reduziert und/oder die Zuverlässigkeit der Vorrichtung erhöht und/oder der Stromverbrauch gesenkt. Als Substrat eignet sich in einigen Ausführungsformen der Erfindung ein Halbleitermaterial und/oder ein optisch transparentes Material.

Der zumindest eine Koppler kann dazu eingesetzt werden, eine einzige Lichtquelle mit einer Mehrzahl optischer Fasern zu verbinden und/oder eine optische Faser abwechselnd mit der Lichtquelle und dem Filterelement zu verbinden und/oder ein Filterelement mit einem photoelektrischen Konverter zu verbinden.

In einigen Ausführungsformen der Erfindung enthält das Substrat Quarz und/oder Silicium und/oder Saphir und/oder Glas und/oder Galliumarsenid. Diese Substrate erlauben eine einfache Integration der optischen Komponenten und/oder die gleichzeitige Integration elektrischer bzw. elektronischer Komponenten auf dem Substrat.

In einigen Ausführungsformen der Erfindung kann auf dem Substrat weiterhin eine elektronische Schaltung integriert sein. Eine solche Schaltung kann als Auswerteschaltung die elektrischen Signale des zumindest einen photoelektrischen Konverters verarbeiten. Hierzu kann die elektronische Schaltung zumindest einen Verstärker und/oder einen A/D-Wandler und/oder einen Speicher und/oder eine analoge oder digitale, drahtlose oder drahtgebundene Schnittstelle realisieren. In anderen Ausführungsformen der Erfindung kann die elektronische Schaltung zusätzlich eine Versorgungsspannung bereitstellen. Hierzu kann die elektronische Schaltung einen Spannungswandler und/oder einen Gleichrichter und/oder eine photoelektrische oder thermoelektrische Zelle enthalten. Schließlich kann die elektronische Schaltung zur Erzeugung eines optischen Eingangssignals herangezogen werden und Funktionen zum Erzeugen einer Versorgungsspannung einer Lichtquelle und/oder Funktionen zur Regelung oder Steuerung der Lichtquelle bereitstellen. Eine solche Integration einer elektronischen Schaltung auf dem Substrat führt zu einer weiteren Miniaturisierung der Vorrichtung und zu einer weiteren Erhöhung der Zuverlässigkeit bei der Bestimmung von Zustandsgrößen an mechanischen Komponenten.

In einigen Ausführungsformen der Erfindung kann die zumindest eine elektronische Schaltung als CMOS-Schaltung realisiert sein. Eine solche CMOS-Schaltung kann mit üblichen, weit verbreiteten Herstellungsverfahren der Mikroelektronik auf einem Siliciumsubstrat realisiert werden, sodass die vorgeschlagene Vorrichtung in einfacher Weise auf bekannten Fertigungsstraßen hergestellt werden kann.

In einigen Ausführungsformen der Erfindung enthält die Vorrichtung weiterhin zumindest eine Lichtquelle, welche auf dem Substrat integriert ist. Somit kann die Vorrichtung vollständig auf einem Substrat integriert werden, sodass sich ein kompakter Aufbau auf nur einem Chip ergibt, welcher kostengünstig produziert und zuverlässig und mit geringem Energieverbrauch betrieben werden kann. Hierdurch können äußerst kompakte Vorrichtungen erzeugt werden, welche in einigen Ausführungsformen lediglich einen Strom- und einen Datenanschluss benötigen und zusammen mit dem faseroptischen Sensor in die mechanische Komponente integriert werden können. Damit können Bauteile realisiert werden, welche sich selbst überwachen und einem Benutzer bzw. dem Wartungspersonal durch Abfragen der Datenleitung Hinweise auf die aufgetretene oder auftretende Belastung und/oder eine Verschleißgrenze geben.

In einigen Ausführungsformen der Erfindung kann die Lichtquelle ein optisches Eingangssignal mit Wellenlängen zwischen 750 nm und 1600 nm, 850 nm und 1500 nm oder 1250 nm und 1450 nm erzeugen. Somit können in einigen Ausführungsformen Lichtwellenleiter bzw. optische Fasern aus der Telekommunikationstechnik verwendet werden, welche leicht verfügbar sind.

In einigen Ausführungsformen der Erfindung kann die Lichtquelle eine Superlumineszenzdiode und/oder ein Halbleiterlaser sein. Eine Superlumineszenzdiode zeichnet sich durch ein breitbandiges optisches Spektrum aus, sodass eine Vielzahl von faseroptischen Sensoren ausgelesen werden kann. Ein Halbleiterlaser kann eine brillante Strahlung erzeugen, welche mit geringen Einfügeverlusten in einen faseroptischen Sensor eingekoppelt werden kann.

Das Filterelement kann in einigen Ausführungsformen eine passive optische Komponente sein, welche zumindest ein einzelnes Faser-Bragg-Gitter mit einer vorgebbaren Gitterkonstanten oder zumindest eine Gruppe von Faser-Bragg-Gittern mit einer vorgebbaren Gitterkonstanten einem bestimmten photoelektrischen Konverter zuordnet. Hierzu kann das Filterelement Licht einer vorgebbaren Wellenlänge bzw. eines vorgebbaren Wellenlängenbereiches reflektieren oder transmittieren, sodass nur dieser Wellenlängenbereich auf den photoelektrischen Konverter trifft. Somit können bestimmte Faser-Bragg-Gitter von bestimmten photoelektrischen Konvertern ausgelesen werden, sodass die Messsignale eindeutig einem bestimmten Ort an der mechanischen Komponente zugeordnet werden können.

In einigen nicht zur Erfindung gehörigen Ausführungsformen kann das Filterelement zumindest ein Arrayed-Waveguide-Grating enthalten. Das Arrayed-Waveguide-Grating stellt ein dispersives Element dar, welches einen Wellenlängenunterschied eines optischen Eingangssignals in einen Ortsunterschied am Ausgang des Arrayed-Waveguide-Gratings abbildet. Sofern am Ausgang ein ortsauflösender photoelektrischer Konverter bzw. eine Mehrzahl unterschiedlicher photoelektrischer Konverter an unterschiedlichen Orten vorgesehen ist, können Signale unterschiedlicher Wellenlänge unabhängig voneinander ausgelesen und damit bestimmten Faser-Bragg-Gittern bzw. bestimmten Messorten zugeordnet werden. Ein Arrayed-Waveguide-Grating kann durch Strukturieren und Ätzen als integrierte optische Komponente auf einem Substrat erzeugt werden. In anderen Ausführungsformen der Erfindung kann ein Arrayed-Waveguide-Grating mittels Materialmodifikation durch eine Laserstrahlung in das Substrat geschrieben werden.
In einigen Ausführungsformen der Erfindung enthält das Filterelement zumindest ein Bragg-Gitter. Ein solches Bragg-Gitter kann Licht einer vorgebbaren Wellenlänge reflektieren und Licht einer abweichenden Wellenlänge transmittieren, sodass nur Licht einer vorgebbaren Wellenlänge den photoelektrischen Wandler erreicht. Damit kann das elektrische Signal eines vorgebbaren photoelektrischen Wandlers bestimmten Faser-Bragg-Gittern bzw. bestimmten Messorten zugeordnet werden.
In einigen Ausführungsformen der Erfindung kann ein Bragg-Gitter mit räumlich veränderlichen Gitterkonstanten als Filterelement verwendet werden. Ein solches Bragg-Gitter reflektiert einen größeren Wellenlängenbereich, sodass auch Licht, welches aufgrund einer Änderung einer mechanischen Zustandsgröße eine verschobene Wellenlänge aufweist, vom Filterelement zum zugehörigen photoelektrischen Konverter gelangen kann.

In einigen Ausführungsformen der Erfindung kann diese zusätzlich zumindest einen Multiplexer mit zumindest zwei Eingängen und zumindest einem Ausgang enthalten, wobei der Ausgang mit dem zumindest einen Filterelement verbunden ist und die Eingänge mit je einem Lichtwellenleiter verbindbar sind. Dieses Merkmal bewirkt, dass eine Mehrzahl von Faser-Bragg-Gittern gleicher Gitterkonstante in unterschiedlichen Lichtwellenleitern sequentiell ausgelesen werden kann. Dadurch kann die Anzahl der vom Filterelement bereitgestellten Kanäle und/oder die Anzahl der photoelektrische Konverter reduziert werden, ohne die Anzahl der auslesbaren Messstellen bzw. Faser-Bragg-Gitter zu reduzieren. Dadurch kann die erfindungsgemäße Vorrichtung einfacher herstellbar und zuverlässig betreibbar sein. In einigen Ausführungsformen der Erfindung kann die Anzahl der vom Filterelement bereitgestellten Kanäle zwischen 8 und 32 liegen.

In einigen Ausführungsformen der Erfindung kann der photoelektrische Konverter zumindest eine Photodiode und/oder zumindest eine CCD-Zeile enthalten. Eine Photodiode kann als pin-Diode ausgeführt sein. Diese Ausführungsform ermöglicht eine rasche Signalauslese, sodass auch zeitlich veränderliche Betriebszustände erfasst werden können, wie beispielsweise Schwingungen. In anderen Ausführungsformen der Erfindung kann aus der Schwingungsanalyse der mechanischen Komponente bzw. aus der Veränderung der Eigenfrequenzen auf deren Verschleiß geschlossen werden. Eine CCD-Zeile erlaubt hingegen die einfache Auslese einer Vielzahl von Kanälen, sodass Vielzahl von Faser-Bragg-Gittern ausgelesen und eine gute Ortsauflösung bei der Messung von Zustandsgrößen erreicht werden kann.

In einigen Ausführungsformen der Erfindung enthält die Vorrichtung weiterhin zumindest einen Wellenleiter zur Übertragung optischer Signale und/oder zumindest eine Leiterbahn zur Übertragung elektrischer Signale. Eine Leiterbahn kann in an sich bekannter Weise durch Raumbereiche bzw. Flächenbereiche einer vorgebbaren elektrischen Leitfähigkeit auf dem Substrat erzeugt werden. Die Leitfähigkeit kann beispielsweise durch Einbringen eines Dotierstoffes oder durch Aufbringen einer strukturierten Schicht aus einem Metall oder einer Legierung erzeugt werden. Wahlweise können mehrerer solcher Schichten auf dem Substrat erzeugt und durch isolierende Schichten voneinander separiert werden, sodass auch umfangreiche Netzwerke zur Übertragung elektrischer Signale auf dem Substrat realisiert werden können.

Zumindest ein Wellenleiter kann auf dem Chip durch Ätzen und/oder Abscheiden einer strukturierten Beschichtung mit einem vorgebbaren Brechungsindex erzeugt werden. In anderen Ausführungsformen der Erfindung kann der Wellenleiter durch Bearbeiten einer Teilfläche bzw. eines Teilvolumens mit einem Laserstrahl erzeugt werden. Auf diese Weise kann eine Mehrzahl von Wellenleitern mit einem Laserstrahl in das Substrat geschrieben werden. Hierzu eignet sich in einigen Ausführungsformen der Erfindung ein gepulster Laserstrahl, insbesondere mit einer Pulslänge von 10 fs bis 200 fs oder 30 fs bis 1000 fs.

Durch die Integration von Wellenleitern und Leiterbahnen auf dem Substrat kann der optische Koppler, das Filterelement und der photoelektrische Konverter sowie die optionale elektronische Schaltung und die optionale Lichtquelle miteinander funktional verbunden werden, sodass die gesamte Signalerzeugung und -auslese auf einem Chip integriert ist.

In einigen Ausführungsformen der Erfindung ist die Vorrichtung auf genau einem Substrat angeordnet. Ein solcher monolithischer Aufbau kann beispielsweise auf einem Siliciumsubstrat erfolgen, da dieses in einfacher Weise die Integration von elektronischen Schaltungen und Wellenleitern sowie weiteren optischen Komponenten erlaubt. Hierdurch wird die Herstellung der Vorrichtung besonders einfach.

In anderen Ausführungsformen der Erfindung kann die Vorrichtung zumindest zwei Substrate enthalten, welche durch Waferbonden und/oder durch Kleben und/oder durch Löten miteinander verbunden sind. Dies erlaubt eine bevorzugte Materialwahl für die einzelnen Komponenten, sodass die Leistungsfähigkeit der einzelnen Komponenten und damit die Leistungsfähigkeit der gesamten Vorrichtung erhöht werden kann. Beispielsweise können die optischen Komponenten auf einem Substrat aus Silicium, Quarz, Saphir oder Glas integriert werden. Eine elektronische Schaltung kann auf einem zweiten Substrat aus Silicium integriert werden und/oder eine Lichtquelle auf einem Substrat aus Galliumarsenid, einem II-VI-Halbleiter oder einem III-V-Halbleiter. Diese einzelnen Substrate werden dann zu einem Substrat zusammengeführt, sodass sich wieder der erfindungsgemäße kompakte Aufbau ergibt.

In einigen Ausführungsformen der Erfindung kann das Substrat zumindest eine Beschichtung aufweisen, welche zumindest als Teilbeschichtung ausgebildet ist und welche Saphir und/oder Siliciumoxid und/oder Bariumtitanat und/oder einen III-V-Halbleiter und/oder einen II-VI-Halbleiter und/oder Silicium enthält oder daraus besteht. Durch eine solche Beschichtung kann beispielsweise eine elektronische Schaltung oder ein optoelektronisches Halbleiterbauelement auf einem Substrat aus Glas oder Quarz realisiert werden. In anderen Ausführungsformen der Erfindung kann ein Wellenleiter aus Bariumtitanat oder ein optoelektronisches Halbleiterbauelement mit direkter Bandlücke auf einem Substrat aus Quarz oder Silicium hergestellt werden. Eine Mehrzahl von elektrischen Leiterbahnen kann übereinander angeordnet sein, wenn diese mit einer isolierenden Beschichtung voneinander separiert sind. Schließlich kann ein Wellenleiter als Streifenwellenleiter ausgebildet sein, wenn eine entsprechende Beschichtung durch nachfolgendes Belichten und Ätzen strukturiert wird. Die Ausführungsform mit zumindest einer als Teilbeschichtung ausgebildeten Beschichtung des Substrates erlaubt somit eine größere Flexibilität bei der Herstellung der erfindungsgemäßen Vorrichtung.
In einigen Ausführungsformen der Erfindung kann die Vorrichtung zur Bestimmung der Bodenbelastung in einem Gebäude verwendet werden. Hierzu kann ein faseroptischer Sensor mit einer Mehrzahl von Faser-Bragg-Gittern in einen Bodenbelag integriert sein, beispielsweise einem Teppich oder einem Kunststoffbelag. Durch Auswerten der räumlichen und/oder zeitlichen Belastung des Bodenbelages kann ein Bewegungsprofil des Benutzer bzw. Bewohners im Gebäude erstellt werden, beispielsweise für Anwendungen in der Alarm- und Sicherheitstechnik. In anderen Ausführungsformen der Erfindung kann die Bodenbelastung überwacht werden, sodass eine Überbelastung einer Geschossdecke verhindert wird, beispielsweise in einem Lagerraum. In wiederum einer anderen Ausführungsform kann aufgrund des Belastungsschemas ein Sturz einer Person erkannt werden, sodass dieser rasche medizinische Hilfeleistung zuteilwerden kann. Diese Anwendungen werden erst durch die erfindungsgemäße integrierte Vorrichtung ermöglicht, da ein einzelner erfindungsgemäßer integrierter Chip die Überwachung vieler Messstellen und damit eine hohe räumliche Auflösung über eine große Fläche ermöglicht.
Nachfolgen soll die Erfindung anhand von Figuren ohne Beschränkung des allgemeinen Erfindungsgedankens näher erläutert werden. Dabei zeigt
Figur 1 die Aufsicht auf eine Vorrichtung gemäß einer nicht zur Erfindung gehörigen Ausführungsform.
Figur 2 zeigt die Aufsicht auf eine erfindungsgemäße Vorrichtung gemäß der zur Erfindung gehörigen Ausführungsform.
Figur 3 zeigt einen Querschnitt durch die Vorrichtung gemäß Figur 2.
Figur 4 erläutert die Funktionsweise der Vorrichtung gemäß Figur 2.

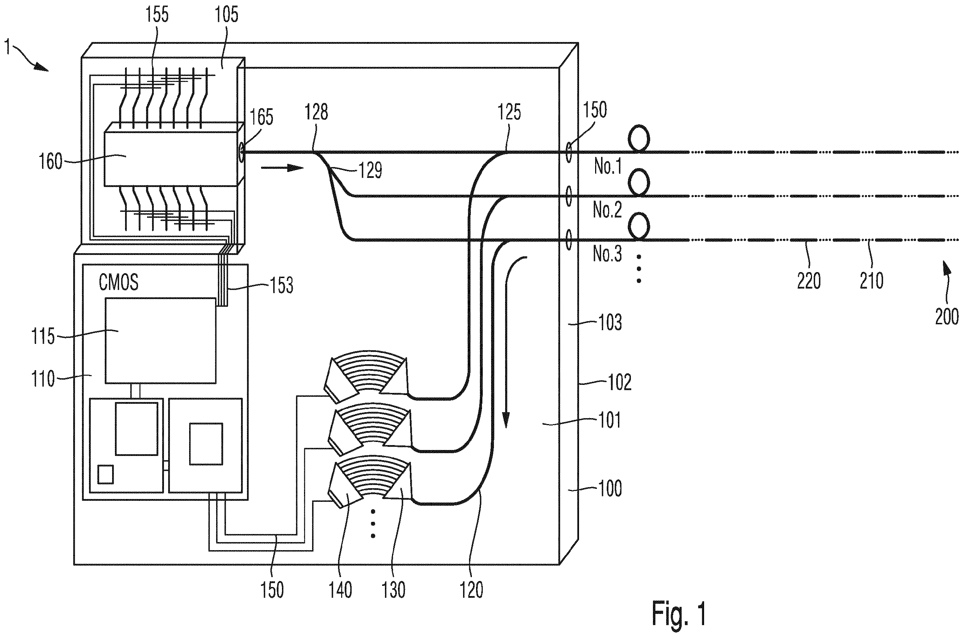

Figur 1 zeigt eine Vorrichtung 1 zur Messung von Zustandsgrößen mit zumindest einem faseroptischen Sensor 200. Der faseroptische Sensor 200 enthält einen Lichtwellenleiter 220. Der Lichtwellenleiter 220 wiederum enthält einen Kern und einen den Kern umgebenden Mantel. Kern und Mantel weisen dabei unterschiedliche Brechungsindizes auf, sodass es an der Grenze zwischen Kern und Mantel zur Totalreflexion des im Kern laufenden optischen Signales kommt. Je nach Durchmesser des Kernes können sich in der optischen Faser eine oder mehrere Moden ausbreiten. In einigen Ausführungsformen der Erfindung kann der Kern gradiert in den Mantel übergehen, sodass sich unterschiedliche optische Weglängen für unterschiedliche Wellenlängen ergeben.

Im Kern des Lichtwellenleiters ist zumindest ein Faser-Bragg-Gitter 210 angeordnet. Das Faser-Bragg-Gitter 210 kann beispielsweise durch gepulste Laserstrahlung in den Kern des Lichtwellenleiters eingeschrieben werden. In einigen Ausführungsformen der Erfindung weist die gepulste Laserstrahlung hierzu eine Pulslänge von 10 fs bis 1000 fs auf. Das Faser-Bragg-Gitter 210 enthält eine Mehrzahl von in etwa quer zur Längserstreckung des Lichtwellenleiters 200 verlaufenden Bereichen, deren Brechungsindex durch die Einwirkung der Laserstrahlung vom Brechungsindex des umgebenden Materials des Kernes abweicht. Der Abstand dieser modifizierten Bereiche bestimmt die Gitterkonstante des Faser-Bragg-Gitters 210. In Abhängigkeit der Gitterkonstanten reflektiert das Faser-Bragg-Gitter 210 eine vorgebbare Wellenlänge bzw. einen Wellenlängenbereich eintreffender optischer Strahlung.

Sofern der Lichtwellenleiter 220 einer mechanischen Spannung oder einer Temperaturschwankung ausgesetzt ist, verändert sich die Gitterkonstante des zumindest einen Faser-Bragg-Gitters 210. Hierdurch wird eine andere Wellenlänge bzw. ein anderer Wellenlängenbereich durch das Faser-Bragg-Gitter 210 reflektiert. Diese Verschiebung der Wellenlänge des Ausgangssignals ist ein Maß für die einwirkende Kraft bzw. die einwirkende Temperatur. In einigen Ausführungsformen der Erfindung kann eine Mehrzahl von Faser-Bragg-Gittern 210 eine identische Gitterkonstante aufweisen. In anderen Ausführungsformen der Erfindung weisen sämtliche Faser-Bragg-Gitter 210 unterschiedliche Gitterkonstanten auf, um so eine räumliche Auflösung des faseroptischen Sensors 200 zu ermöglichen.

Um mit dem faseroptischen Sensor 200 Messwerte zu erhalten, muss in diesen ein optisches Eingangssignal eingekoppelt und die von dem Faser-Bragg-Gitter 210 reflektierten Signale erfasst werden. Hierzu dient die Vorrichtung 1, welche im dargestellten Ausführungsbeispiel alle für die Signalerzeugung und Auswertung erforderlichen Komponenten auf einem Substrat 100 vereint. Hierdurch können die Messsignale zuverlässig und in einer kompakten Baugruppe erzeugt werden.

Das Substrat 100 weist eine erste Seite 101 und eine gegenüberliegende zweite Seite 102 auf. Im dargestellten Ausführungsbeispiel wird nur die erste Seite 101 strukturiert, um die zur Signalerzeugung und -auslese erforderlichen Komponenten zu erzeugen. Selbstverständlich kann das Substrat 100 jedoch auch beidseitig bearbeitet werden.

In einigen Ausführungsformen der Erfindung kann das Substrat 100 Quarz, Silicium, Saphir, Glas oder Galliumarsenid enthalten oder daraus bestehen. Das Substrat 100 kann einen Dotierstoff enthalten, um eine vorgebbare elektrische Leitfähigkeit oder einen vorgebbaren Brechungsindex zu erzeugen. Daneben kann das Substrat 100 unvermeidbare Verunreinigungen enthalten, welche bei der Herstellung oder der Weiterverarbeitung des Substrates 100 in dieses oder auf dessen Oberfläche aufgebracht werden.

Im dargestellten Ausführungsbeispiel weist das Substrat eine Ausnehmung 105 auf, welche beispielsweise durch nasschemisches oder trockenchemisches Ätzen in die erste Seite 101 des Substrates 100 eingebracht werden kann. Die Ausnehmung 105 ist jedoch optional und kann in anderen Ausführungsformen der Erfindung auch entfallen. In der Ausnehmung 105 ist eine Lichtquelle 160 angeordnet, beispielsweise eine Superlumineszenzdiode oder ein Halbleiterlaser. Die Lichtquelle 160 kann in einigen Ausführungsformen der Erfindung dazu eingerichtet sein, eine Strahlung mit einer Wellenlänge zwischen 800 nm und 1500 nm zu erzeugen. In anderen Ausführungsformen der Erfindung kann die Wellenlänge zwischen 1300 nm und 1600 nm liegen. Die Lichtquelle 160 kann eine gepulste Strahlung abgeben oder im Dauerstrichbetrieb eingesetzt werden. Die Lichtquelle 160 stellt einen Wandler elektrischer Energie in optische Leistung dar. Daher weist die Lichtquelle 160 zumindest einen Anschlusskontakt 155 auf, mit welchem die Lichtquelle 160 mit elektrischer Energie und/oder Steuersignalen versorgt wird. Die Lichtquelle 160 ist im dargestellten Ausführungsbeispiel aus einem anderen Material gefertigt als das Substrat 100, beispielsweise einem II-VI-Halbleiter, einem III-V-Halbleiter oder Galliumarsenid. Die Lichtquelle 160 kann durch Löten, Kleben oder Flip-Chip-Bonding auf dem Substrat 100 befestigt sein.

Die Lichtquelle 160 weist eine Austrittsöffnung 165 auf, durch welche die optische Strahlung austritt. Die Lichtstrahlung wird in einen Wellenleiter 120 eingekoppelt und erreicht einen optionalen optischen Koppler 128. Dieser spaltet die optische Leistung eines Eingangssignals auf zwei Ausgangssignale auf. Im dargestellten Ausführungsbeispiel ist hinter dem ersten optischen Koppler 128 ein zweiter optischer Koppler 129 angeordnet. Somit wird das Licht der Lichtquelle 160 auf drei Ausgangswellenleiter aufgeteilt, an welche drei faseroptische Sensoren 200 angeschlossen sind. In anderen Ausführungsformen der Erfindung kann die Anzahl der faseroptischen Sensoren 200 größer oder geringer sein und zwischen 1 und etwa 25 liegen. Die Erfindung lehrt nicht die Verwendung von exakt drei faseroptischen Sensoren 200 als Lösungsprinzip. Zum Anschluss der faseroptischen Sensoren 200 stehen Ausgangskoppler 150 zur Verfügung, welche an der Stirnseite 103 des Substrates 100 angeordnet sind.

Das von den Faser-Bragg-Gittern 210 reflektierte Licht erreicht die Vorrichtung 1 wieder über die Ausgangskoppler 150. Über einen Koppler 125 wird das von den faseroptischen Sensoren 200 reflektierte Licht zumindest einem Filterelement 130 zugeführt. Im dargestellten Ausführungsbeispiel ist für jeden faseroptischen Sensor 200 ein eigenes Filterelement 130 vorgesehen. Das Filterelement 130 umfasst eine passive optische Komponente, welche eine spektrale Analyse des eingekoppelten Lichtes ermöglicht. Im dargestellten Ausführungsbeispiel handelt es sich dabei um zumindest ein Arrayed-Waveguide-Grating 130. Das Arrayed-Waveguide-Grating 130 bildet Licht unterschiedlicher Wellenlänge aus dem Wellenleiter 120 auf unterschiedliche Orte an seinem Ausgang ab. Somit kann durch eine ortsabhängige Messung der Lichtintensität auf die Wellenlängen der im Wellenleiter 120 laufenden optischen Signale geschlossen werden. Zur ortsabhängigen Messung steht jeweils eine CCD-Zeile 140 zur Verfügung, welche eine gute Ortsauflösung und damit eine gute Frequenzauflösung der optischen Signale ermöglicht.

Die CCD-Zeile dient als elektrooptischer Konverter, welche das optische Signal der faseroptischen Sensoren 200 in ein elektrisches Signal wandelt. Das elektrische Signal wird über elektrische Leiterbahnen 150 einer elektronischen Schaltung 115 zugeführt. Die elektronische Schaltung 115 kann einen Verstärker, einen Impedanzwandler, einen A/D-Wandler oder weitere Schaltungen enthalten, um die elektrischen Signale zu verstärken, zu übermitteln, zu diskriminieren oder zu speichern. Weiterhin kann die elektronische Schaltung 115 eine Energieversorgung der auf dem Substrat 100 befindlichen elektrischen bzw. elektrooptischen Bauelemente sicherstellen oder Steuersignale an die Lichtquelle 160 weitergeben. Hierzu kann die elektronische Schaltung 115 mit optionalen Leiterbahnen 153 mit der Lichtquelle 160 verbunden sein.
Die elektronische Schaltung 115 kann monolithisch auf dem Substrat 100 integriert sein, insbesondere wenn es sich bei dem Substrat 100 um ein halbleitendes Substrat handelt. In anderen Ausführungsformen der Erfindung kann auf dem Substrat 100 eine Beschichtung aus einem Halbleitermaterial aufgebracht sein, auf welcher nachfolgend durch Strukturieren und Ätzen eine elektronische Schaltung realisiert wird. In wiederum einer anderen Ausführungsform der Erfindung kann die elektronische Schaltung 115 auf einem zweiten Substrat 110 realisiert werden, welches durch ein SOI-Verfahren, Flip-Chip-Bonding oder ein anderes, an sich bekanntes Verfahren auf dem Substrat 100 befestigt wird.
Die elektrischen Leiterbahnen 150 und 152 können durch Aufbringen einer Metallisierung auf dem Substrat 100 realisiert werden. Das Filterelement 130, die Koppler 128, 129 und 125 sowie die Wellenleiter 120 können durch Ätzen des Substrates 100, durch Aufbringen und laterales Strukturieren einer Beschichtung oder durch Materialmodifikation mit einer Laserstrahlung in dem Substrat 100 auf bzw. in dem Substrat 100 realisiert werden. Damit ist die Vorrichtung 1 auf einem Substrat 100 betriebssicher und kompakt aufgebaut, sodass auch eine große Anzahl von Faser-Bragg-Gittern 210 zuverlässig ausgelesen werden kann, beispielsweise mehr als 100, mehr als 200 oder mehr als 300 Faser-Bragg-Gitter 210.

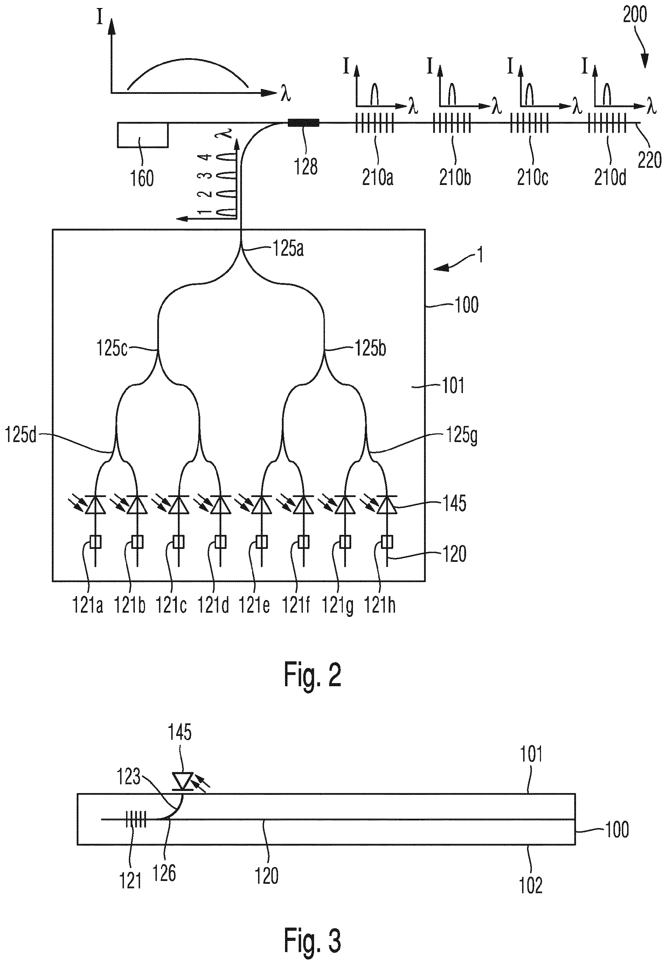

Figur 2 zeigt eine der erfindungsgemäßen Vorrichtung 1. Beispielhaft ist ein faseroptischer Sensor mit vier Faser-Bragg-Gittern 210a, 210b, 210c und 210d dargestellt. Selbstverständlich kann die Anzahl der faseroptischen Sensoren 200 und die Anzahl an Faser-Bragg-Gitter pro faseroptischen Sensor 200 auch größer oder geringer sein. In dem faseroptischen Sensor 200 wird das Licht einer Lichtquelle 160 über einen Koppler 128 eingekoppelt, wie vorstehend anhand von Figur 1 beschrieben. Das von der Lichtquelle 160 ausgesandte Spektrum ist schematisch in Figur 2 dargestellt. Wie aus der Figur ersichtlich ist, weist die Intensität über die Wellenlänge eine breite Verteilung auf.

An jedem der Faser-Bragg-Gitter 210a, 210b, 210c und 210d wird ein Teil des Spektrums reflektiert, wobei die Breite und/oder die mittlere Wellenlänge von der Gitterkonstanten des jeweiligen Faser-Bragg-Gitters 210 und/oder der auf den faseroptischen Sensor 200 einwirkenden mechanischen Spannung und/oder der Temperatur abhängt. Das vom faseroptischen Sensor 200 erzeugte und über den Koppler 128 der Vorrichtung 1 zugeführte Signal ist ebenfalls schematisch in Figur 2 dargestellt. Im Vergleich zum eingestrahlten Spektrum enthält das empfangene Spektrum vier engere Wellenlängenbereiche, welche jeweils einem Faser-Bragg-Gitter 210 zugeordnet werden können.

Das empfangene Ausgangssignal des Sensors 200 wird der Vorrichtung 1 zugeführt, welche auf einem Substrat 100 mit einer ersten Seite 101 und einer gegenüberliegenden zweiten Seite 102 aufgebaut ist. Die Vorrichtung 1 enthält sieben Koppler 125a, 125b, 125c, 125d, 125e, 125f und 125g. Jeder der Koppler spaltet die eintreffende optische Leistung in zwei optische Pfade auf, sodass sich am Ende acht Pfade ergeben. Jeweils zwei dieser Pfade sind zur Auswertung des Signales eines Faser-Bragg-Gitters 210 eingerichtet. Hierzu ist jeder optische Pfad mit einem photoelektrischen Konverter 145 ausgestattet. Im vorliegenden Ausführungsbeispiel handelt es sich dabei um Photodioden, welche eintreffende optische Signale mit großer Bandbreite in elektrische Signale wandeln können, sodass auch schnelle Lastwechsel oder Schwingungszustände mit dem faseroptischen Sensor 200 erfasst werden können. Da über den Koppler 125 alle Signale aller Faser-Bragg-Gitter 210 in jeden Pfad geleitet werden, enthält jeder Pfad ein Bragg-Gitter 121, um einen wellenlängenselektiven Nachweis eines Teilspektrums in jeder der Photodioden 145 zu ermöglichen. Die Funktionsweise kann am besten anhand des Querschnittes der Figur 3 nachvollzogen werden.

Figur 3 zeigt einen Querschnitt durch das Substrat 100. Im Inneren des Substrates 100 verläuft der Wellenleiter 120. Am Ende des Wellenleiters 120 befindet sich ein Bragg-Gitter 121, welches Licht einer vorgebbaren Wellenlänge reflektiert. In einigen Ausführungsformen der Erfindung kann das Bragg-Gitter 121 eine räumlich veränderliche Gitterkonstante aufweisen, sodass dieses einen breiteren Wellenlängenbereich reflektiert. Die vom Bragg-Gitter 121 nicht reflektierten Wellenlängen verlassen den Wellenleiter 120 durch dessen Ende und werden im Substrat 100 absorbiert.

Der vom Bragg-Gitter 121 reflektierte Anteil erreicht den Koppler 126 und von dort über den Wellenleiter 123 den aktiven Bereich der Photodiode 145. Im dargestellten Ausführungsbeispiel weist jedes der Bragg-Gitter 121a, 121b, 121c, 121d, 121e, 121f, 121g, 121h eine unterschiedliche Gitterkonstante auf, sodass in jeder Photodiode ein anderer Teil des Spektrums nachgewiesen werden kann.

Die Photodioden sind an der Oberfläche 101 des Substrates 100 angeordnet, wohingegen der Wellenleiter und das als Filterelement wirkende Bragg-Gitter 121 im Inneren des Substrates verlaufen.

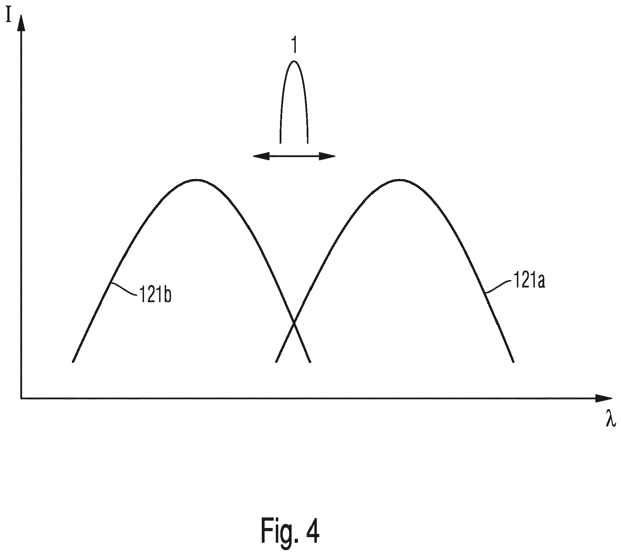

Die Auswertung der Signale zeigt schematisch Figur 4. Dargestellt ist die reflektierte Intensität bzw. die eingestrahlte Intensität über die Wellenlänge. Eingezeichnet sind die Reflexionsspektren zweier Bragg-Gitter 121a und 121b, welche als Filterelement verwendet werden. Wie aus Figur 4 ersichtlich ist, ist das Reflexionsspektrum vergleichsweise breit, da die Bragg-Gitter 121 eine räumlich veränderliche Gitterkonstante aufweisen. Weiterhin ist aus Figur 4 ersichtlich, dass zwei benachbarte Bragg-Gitter 121a und 121b ein unterschiedliches Reflexionsspektrum zeigen.

Weiterhin ist in Figur 4 das von einem Faser-Bragg-Gitter, beispielsweise dem Faser-Bragg-Gitter 210a, reflektierte Lichtspektrum 1 eingezeichnet. Bei einer Änderung der Gitterkonstante des Faser-Bragg-Gitters 210a wird sich die Mittenfrequenz des reflektierten Spektrums 1 verschieben, wie anhand des Pfeiles schematisch dargestellt. Dies führt zu einer verstärkten Reflexion am Bragg-Gitter 121a und einer reduzierten Reflexion am Bragg-Gitter 121b oder vice versa. Damit verhalten sich die Signale in zwei benachbarten Photodioden 145 komplementär, sodass die elektrischen Signale plausibilisiert werden können. In einigen Ausführungsformen der Erfindung sind die Gitterkonstanten der Bragg-Gitter 121a und 121b so gewählt, dass das reflektierte Spektrum 1 im näherungsweise linearen Bereich der Reflexionsspektren bleibt. Dies erleichtert die Auswertung der elektrischen Signale.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus.

## Patentansprüche

1. Vorrichtung (1) zur Messung von Zustandsgrößen mit zumindest einem faseroptischen Sensor (200), wobei die Vorrichtung zumindest enthält:
Zumindest einen optischen Koppler (125a, 125b, 125c, 125d, 125e, 125f, 125g, 128, 126), welcher jeweils drei Anschlüsse aufweist,
zumindest ein Filterelement, welches zumindest ein Bragg-Gitter (121) enthält, und
zumindest einen photoelektrischen Konverter (145), wobei
zumindest ein optischer Koppler (125, 126, 128), ein Filterelement (121) und ein photoelektrischer Konverter (145) auf einem Substrat (100) integriert sind, welches zwei gegenüberliegende Oberflächen aufweist,
**dadurch gekennzeichnet, dass**
der erste Anschluss des optischen Kopplers (126) dazu eingerichtet ist, Licht von einem faseroptischen Sensor (200) zu empfangen und an den zweiten Anschluss zu leiten, welcher mit dem Bragg-Gitter (121) verbunden ist, wobei das vom Bragg-Gitter (121) reflektierte Licht über den zweiten Anschluss und den dritten Anschluss des optischen Kopplers (126) dem photoelektrischen Konverter (145) zuführbar ist und
der erste und der zweite Anschluss des optischen Kopplers (126) in einer Ebene liegen, welche parallel zu jeder der zwei gegenüberliegenden Oberflächen des Substrats ist und wobei sich der dritte Anschluss des optischen Kopplers (126) senkrecht zu dieser Ebene erstreckt.

2. Vorrichtung nach Anspruch 1, **dadurch gekennzeichnet, dass** das Substrat (100) Quarz und/oder Silicium und/oder Saphir und/oder Glas und/oder GaAs enthält oder daraus besteht.

3. Vorrichtung nach einem der Ansprüche 1 oder 2, weiterhin enthaltend zumindest eine elektronische Schaltung (115), insbesondere eine CMOS-Schaltung, welche auf dem Substrat (100) integriert ist.

4. Vorrichtung nach einem der Ansprüche 1 bis 3, weiterhin enthaltend zumindest eine Lichtquelle (160), welche auf dem Substrat (100) integriert ist, insbesondere eine Superlumineszenzdiode und/oder ein Halbleiterlaser.

5. Vorrichtung nach einem der Ansprüche 1 bis 4, **dadurch gekennzeichnet, dass** das Bragg-Gitter eine räumlich veränderliche Gitterkonstanten aufweist.

6. Vorrichtung nach einem der Ansprüche 1 bis 5, weiterhin enthaltend zumindest einen Multiplexer, mit zumindest zwei Eingängen und zumindest einem Ausgang, wobei der Ausgang mit dem zumindest einem Filterelement (121, 130) verbunden ist und die Eingänge mit je einem Lichtwellenleiter (200) verbindbar sind.

7. Vorrichtung nach einem der Ansprüche 1 bis 6, **dadurch gekennzeichnet, dass** der photoelektrische Konverter (145) zumindest eine Photodiode (145) und/oder zumindest eine CCD-Zeile enthält.

8. Vorrichtung nach einem der Ansprüche 1 bis 7, weiterhin enthaltend zumindest einen Wellenleiter (120) zur Übertragung optischer Signale und/oder zumindest eine Leiterbahn zur Übertragung elektrischer Signale.

9. Vorrichtung nach einem der Ansprüche 1 bis 8, **dadurch gekennzeichnet, dass** diese auf genau einem Substrat (100) angeordnet ist oder dass diese zumindest zwei Substrate (100, 110) enthält, welche durch Waferbonden und/oder durch Kleben und/oder durch Löten miteinander verbunden sind.

10. Vorrichtung nach einem der Ansprüche 1 bis 9, **dadurch gekennzeichnet, dass** das Substrat (100) zumindest eine Beschichtung aufweist, welche zumindest als Teilbeschichtung ausgebildet ist und welche Saphir und/oder SiO₂ und/oder BaTiO₃ und/oder einen III-V-Halbleiter und/oder einen II-VI-Halbleiter und/oder Si enthält oder daraus besteht.

11. Vorrichtung nach Anspruch 10, **dadurch gekennzeichnet, dass** auf dem Substrat (100) eine Mehrzahl von strukturierten Schichten nebeneinander und/oder übereinander angeordnet ist.

12. Vorrichtung nach einem der Ansprüche 1 bis 11, **dadurch gekennzeichnet, dass** das Filterelement (121) weiterhin zumindest einen im Inneren des Substrates (100) verlaufenden ein Wellenleiter (120) enthält, an dessen Ende das Bragg-Gitter (121) angeordnet ist.

13. Vorrichtung nach einem der Ansprüche 1 bis 12, **dadurch gekennzeichnet, dass** das Filterelement (121) zumindest zwei Bragg-Gitter (121) enthält, welche ein unterschiedliches Reflexionsspektrum zeigen.

14. Vorrichtung nach einem der Ansprüche 1 bis 13, **dadurch gekennzeichnet, dass** die Gitterkonstante des Bragg-Gitters (121) so gewählt ist, dass das reflektierte Spektrum im näherungsweise linearen Bereich des Reflektionsspektrums bleibt.

15. Verwendung einer Vorrichtung nach einem der Ansprüche 1 bis 14 zur Bestimmung der Bodenbelastung in einem Gebäude und/oder zur Messung von Zustandsgrößen an mechanischen Komponenten.

## Claims

1. Apparatus (1) for measuring state variables with at least one fiber-optic sensor (200), the apparatus at least containing:
at least one optical coupler (125a, 125b, 125c, 125d, 125e, 125f, 125g, 128, 126) each having three terminals,
at least one filter element containing at least one Bragg grating (121), and at least one photoelectric converter (145), wherein
at least one optical coupler (125, 126, 128), a filter element (121) and a photoelectric converter (145) are integrated on a substrate (100), which has two opposing surfaces,
**characterized in that**
the first terminal of the optical coupler (126) is configured to receive light from a fiber optic sensor (200) and direct it to the second terminal which is connected to the Bragg grating (121), wherein the light reflected by the Bragg grating (121) can be supplied to the photoelectric converter (145) via the second terminal and the third terminal of the optical coupler (126), and
the first and second terminals of the optical coupler (126) lie in a plane which is parallel to each of the two opposing surfaces of the substrate and wherein the third terminal of the optical coupler (126) extends perpendicularly to this plane.

2. Apparatus according to claim 1, **characterized in that** the substrate (100) contains or consists of quartz and/or silicon and/or sapphire and/or glass and/or GaAs.

3. Apparatus according to any of claims 1 or 2, further containing at least one electronic circuit (115), in particular a CMOS circuit, which is integrated on the substrate (100).

4. Apparatus according to any of claims 1 to 3, further containing at least one light source (160), which is integrated on the substrate (100), in particular a superluminescent diode and/or a semiconductor laser.

5. Apparatus according to any of claims 1 to 4, **characterized in that** the Bragg grating has a spatially variable grating constant.

6. Apparatus according to any of claims 1 to 5, further containing at least one multiplexer with at least two inputs and at least one output, wherein the output is connected to the at least one filter element (121, 130) and the inputs can each be connected to an optical waveguide (200).

7. Apparatus according to any of claims 1 to 6, **characterized in that** the photoelectric converter (145) contains at least one photodiode (145) and/or at least one CCD line.

8. Apparatus according to any of claims 1 to 7, further containing at least one waveguide (120) for transmitting optical signals and/or at least one conductor path for transmitting electrical signals.

9. Apparatus according to any of claims 1 to 8, **characterized in that** it is arranged on exactly one substrate (100) or **in that** it contains at least two substrates (100, 110) which are connected to one another by wafer bonding and/or by bonding and/or by soldering.

10. Apparatus according to any of claims 1 to 9, **characterized in that** the substrate (100) has at least one coating which is formed at least as a partial coating and which contains or consists of sapphire and/or SiO₂ and/or BaTiO₃ and/or a III-V semiconductor and/or a II-VI semiconductor and/or Si.

11. Apparatus according to claim 10, **characterized in that** a plurality of structured layers are arranged next to one another and/or one above the other on the substrate (100).

12. Apparatus according to any of claims 1 to 11, **characterized in that** the filter element (121) further contains at least one waveguide (120) running inside the substrate (100), at the end of which waveguide the Bragg grating (121) is arranged.

13. Apparatus according to any of claims 1 to 12, **characterized in that** the filter element (121) contains at least two Bragg gratings (121) which exhibit a different reflection spectrum.

14. Apparatus according to any of claims 1 to 13, **characterized in that** the grating constant of the Bragg grating (121) is selected in such a way that the reflected spectrum remains in the approximately linear range of the reflection spectrum.

15. Use of an apparatus according to any of claims 1 to 14 for determining the floor load in a building and/or for measuring state variables on mechanical components.

## Revendications

1. Dispositif (1) pour mesurer des grandeurs d'état, comportant au moins un capteur à fibre optique (200), le dispositif contenant au moins :
au moins un coupleur optique (125a, 125b, 125c, 125d, 125e, 125f, 125g, 128, 126) qui comprend trois bornes respectives,
au moins un élément de filtre qui contient au moins un réseau de Bragg (121), et
au moins un convertisseur photoélectrique (145),
dans lequel
au moins un coupleur optique (125, 126, 128), un élément de filtre (121) et un convertisseur photoélectrique (145) sont intégrés sur un substrat (100) qui comprend deux surfaces opposées,
**caractérisé en ce que**
la première borne du coupleur optique (126) est conçue pour recevoir de la lumière en provenance d'un capteur à fibre optique (200) et pour l'acheminer à la seconde borne qui est reliée au réseau de Bragg (121), la lumière réfléchie par le réseau de Bragg (121) pouvant être amenée au convertisseur photoélectrique (145) via la seconde borne et via la troisième borne du coupleur optique (126), et
la première et la seconde borne du coupleur optique (126) se situent dans un plan qui est parallèle à chacune des deux surfaces opposées du substrat, et
la troisième borne du coupleur optique (126) s'étend perpendiculairement audit plan.

2. Dispositif selon la revendication 1,
**caractérisé en ce que**
le substrat (100) contient du quartz et/ou du silicium et/ou du saphir et/ou du verre et/ou du GaAs, ou en est constitué.

3. Dispositif selon l'une des revendications 1 ou 2, contenant en outre au moins un circuit électronique (115), en particulier un circuit CMOS qui est intégré sur le substrat (100).

4. Dispositif selon l'une des revendications 1 à 3, contenant en outre au moins une source de lumière (160) qui est intégrée sur le substrat (100), en particulier une diode superluminescente et/ou un laser à semi-conducteur.

5. Dispositif selon l'une des revendications 1 à 4,
**caractérisé en ce que**
le réseau de Bragg présente une constante de réseau variable dans l'espace.

6. Dispositif selon l'une des revendications 1 à 5, contenant en outre au moins un multiplexeur pourvu d'au moins deux entrées et d'au moins une sortie, la sortie étant connectée audit au moins un élément de filtre (121, 130) et les entrées pouvant être connectées chacune à un guide d'ondes lumineuses (200).

7. Dispositif selon l'une des revendications 1 à 6,
**caractérisé en ce que**
le convertisseur photoélectrique (145) contient au moins une photodiode (145) et/ou au moins une ligne CCD.

8. Dispositif selon l'une des revendications 1 à 7, contenant en outre au moins un guide d'ondes (120) pour transmettre des signaux optiques et/ou au moins une piste conductrice pour transmettre des signaux électriques.

9. Dispositif selon l'une des revendications 1 à 8,
**caractérisé en ce que**
celui-ci est agencé sur précisément un substrat (100), ou **en ce que** celui-ci contient au moins deux substrats (100, 110) qui sont reliés entre eux par bonding et/ou par collage et/ou par brasage.

10. Dispositif selon l'une des revendications 1 à 9,
**caractérisé en ce que**
le substrat (100) comprend au moins un revêtement qui est réalisé au moins sous forme de revêtement partiel et qui contient du saphir et/ou du SiO₂ et/ou du BaTiO₃ et/ou un semi-conducteur III-V et/ou un semi-conducteur II-VI et/ou du Si, ou qui en est constitué.

11. Dispositif selon la revendication 10,
**caractérisé en ce que**
une pluralité de couches structurées sont agencées les unes à côté des autres et/ou les unes au-dessus des autres sur le substrat (100).

12. Dispositif selon l'une des revendications 1 à 11,
**caractérisé en ce que**
l'élément de filtre (121) contient en outre au moins un guide d'ondes (120) s'étendant à l'intérieur du substrat (100), à l'extrémité duquel est agencé le réseau de Bragg (121).

13. Dispositif selon l'une des revendications 1 à 12,
**caractérisé en ce que**
l'élément de filtre (121) contient au moins deux réseaux de Bragg (121) qui présentent un spectre de réflexion différent.

14. Dispositif selon l'une des revendications 1 à 13,
**caractérisé en ce que**
la constante du réseau de Bragg (121) est choisie de telle sorte que le spectre réfléchi reste dans la plage approximativement linéaire du spectre de réflexion.

15. Utilisation d'un dispositif selon l'une des revendications 1 à 14 pour déterminer la charge au sol dans un bâtiment et/ou pour mesurer des grandeurs d'état sur des composants mécaniques.
